# EUROPÄISCHE PATENTSCHRIFT

(11) **EP 2 283 264 B1**
(45) Veröffentlichungstag und Bekanntmachung des Hinweises auf die Patenterteilung: **04.01.2012**
(21) Anmeldenummer: 09724335.6
(22) Anmeldetag: 25.03.2009
(51) Int. Cl.: F16K 31/06, F16K 31/08

(54) **MAGNETVENTILEINHEIT**
SOLENOID VALVE UNIT
UNITÉ À ÉLECTROVANNES

(30) Priorität: 25.03.2008 DE 102008015497
(43) Veröffentlichungstag der Anmeldung: 16.02.2011
(73) Patentinhaber: Fraunhofer-Gesellschaft zur Förderung der angewandten Forschung e.V., 80686 München (DE)
(72) Erfinder: SCHLENKER, Dirk, 70563 Stuttgart (DE); OTHMAN, Nabih, 70563 Stuttgart (DE)
(74) Vertreter: Rösler, Uwe
(86) Internationale Anmeldenummer: PCT/DE2009/000403
(87) Internationale Veröffentlichungsnummer: WO 2009/117995

(56) Entgegenhaltungen:
- EP-A- 0 213 516
- DE-A1- 3 305 604
- DE-A1- 4 006 871
- DE-A1- 10 249 936
- DE-B- 1 001 073
- DE-C- 914 086
- GB-A- 744 858
- US-A1- 2006 102 234

## Beschreibung

### Technisches Gebiet

Die Erfindung bezieht sich auf eine Magnetventileinheit zum Unterbrechen oder Freigeben eines Durchflusses eines Mediums längs eines Hohlkanals, das Druckbeaufschlagt längs des Hohlkanals strömt, mit wenigstens einer längs des Hohlkanals fest angeordneten ersten Magneteinheit sowie einer zur ersten Magneteinheit beweglich gelagerten zweiten Magneteinheit, die aufgrund einer zwischen beiden Magneteinheiten herrschenden anziehenden Magnetkraft in mittel-oder unmittelbaren Kontakt mit der ersten Magneteinheit bringbar ist und dabei den Hohlkanal fluiddicht abdichtet, während das Medium Druckbeaufschlagt entgegen der Wirkrichtung der Magnetkraft auf die zweite Magneteinheit lastet,

### Stand der Technik

Gattungsgemäße Vorrichtungen zum dosierten Ausbringen von viskosen Medien, vorzugsweise nieder-, mittel- und hochviskosen Flüssigkeiten, wie beispielsweise Öle, Fette, Klebstoffe und Lötpasten, um nur einige zu nennen, sind vielfach auch unter der Bezeichnung "Dispenser" bekannt und werden in unterschiedlichsten Technikgebieten, wie Feinwerk-, Nano-, Mikrotechnik, insbesondere Bereiche der Mikroelektronik, Mikrooptik, Mikromechanik als auch in der Bio- und Medizintechnik eingesetzt. Typische Anwendungsfälle derartiger Dispenser-Systeme für mittel- und hochviskose Medien betreffen beispielsweise das exakte Ausbringen und Positionieren kleinster Klebstofftropfen zum Fügen in der Elektronikfertigung, die Schmierung von Lagern mit Ölen und Fetten im Maschinenbau, vorzugsweise in Bereichen der Mikromechanik, sowie das kontinuierliche oder zyklische Fördern von Reagenzien in der chemischen Industrie oder zu Zwecken der Analysetechnik oder auch zur Verabreichung feinst dosierter flüssiger Arzneimittel zur Patientenversorgung, insbesondere in der Intensivmedizin.

Aus einem Beitrag von F. Kohler "Punkt für Punkt - Die Techniken für das Dispensen von Lotpasten", erschienen in "productronic" (1991), No. 4, Seiten 18 bis 20, ist eine Übersicht von Dispenser-Systeme für mittel- und hochviskoser Medien zu entnehmen, die insbesondere zur Erzeugung und Platzierung von Tropfen, so genannter Dots, im Rahmen des zyklischen Dispensens von Medien geeignet sind. Neben den darin beschriebenen Zeit/Druck-Kartuschen-Dosiersystemen, Rotations-Schrauben-Dosiersystemen, Peristaltik Dispensersystemen und Kolben-Positiv-Displacement-Dosiersystemen sind darüber hinaus auch Magnetventilsysteme bekannt, deren Ventilmechanismus auf einer gegenseitigen Abstimmung von herrschenden Magnetkräften mit dem Strömungs- oder Förderdruck beruht, der von einem mittels der Ventileinheit zu dosierenden Medienstrom herrührt.

In diesem Zusammenhang sei hierzu auf die DE 38 02 658 A1 verwiesen, in der ein Magnetventil beschrieben ist, dessen Funktionsweise durch die axiale Position eines axial zum Hohlkanal beweglich gelagerten Permanentmagneten bestimmt wird. Aufgrund der magnetischen Verhältnisse der in dem Magnetventil vorhandenen Permanentmagnete bleibt die Ventilanordnung in einer von äußeren Krafteinwirkungen unbelasteten Grundposition offen, zumal die axial bewegliche Magneteinheit eine axial wirkende abstoßende Kraft durch die gleichfalls im Hohlkanal vorgesehene Magneteinheit erfährt. Wirkt hingegen ein entsprechend axialer Strömungsdruck bzw. Volumenstrom auf den Ventilsitz ein, so wird dieser axial verschoben und gegen eine Ventilnadel bewegt, bis bei Erreichen eines maximalen Volumenstroms die Ventileinheit in einen geschlossenen Zustand übergeht. Durch die Formgebung des Ventilkörpers und der angestrebten großen Längsbeweglichkeit des Ventilsitzes in Axialrichtung lässt sich das bekannte Magnetventil in besonders vorteilhafter Weise als Magnetregelventil einsetzen. Zu diesem Zwecke sind längs der Hohlraumwand optische Sensoren vorgesehen, um die axiale Lage des Ventilsitzes zu erfassen.

Aus der EP 0 213 516 geht ein selbsttätig arbeitendes Absperrventil, insbesondere für Ölbrenner, hervor, das ein Nachtropfen von Öl nach Beendigung des Brennvorganges vermeiden soll. Das Absperrventil sieht hierzu einen längsbeweglichen Absperrkörper vor, der vollständig oder teilweise aus einem permanentmagnetischen Material besteht. In einem Ausgangszustand befindet sich der Absperrkörper einseitig fluiddicht anliegend an der als Anker bezeichneten Komponente, die eine mittige Bohrung aufweist, durch die Flüssigöl gespeist wird. Liegt eine Ölströmung an, so drückt diese den Absperrkörper unter Überwindung der magnetischen Haltekräfte in eine axial entfernte Position vom Anker, so dass es zu einem Öldurchfluss durch die Öldüse kommt. Der Absperrkörper schließt dabei mit dem diesen umgebenden hülsenartigen Element einen Zwischenspalt ein.

Aus der US 5,320,136 ist ein magnetisches Absperrventil zu entnehmen, das eine Tellerventileinheit umfasst, die mit einem Permanentmagneten kombiniert ist. In einem Ausgangszustand befindet sich das Tellerventil durch gegenseitige magnetische Anziehung der vorhandenen Magnete in einer geschlossenen Ventilstellung, wohingegen bei Anliegen und Überschreiten eines Strömungsdruckes auf das Tellerventil über die magnetische Haltekraft hinaus eine axiale Auslenkung des Tellerventils hervorgerufen wird, wodurch das Ventil geöffnet wird.

Aus der US 3,026,903 geht ein magnetisches Absperrventil hervor, in dem eine magnetische Kugel axial beweglich innerhalb einer magnetischen Hülse gelagert ist. In einem Ausgangszustand befindet sich die Kugel in einem oberen Bereich und tritt fluiddicht in Kontakt mit einer Dichtscheibe. Sobald ein Medienstrom durch das Ventil anliegt, wird die Kugel entgegen der magnetischen Haltekraft ausgelenkt, wodurch das Absperrventil öffnet.

Ferner ist der WO 2008/037430, die einen gegenüber der vorliegenden Anmeldung nachveröffentlichten Stand der Technik darstellt, eine gattungsgemäße Ventileinheit zu entnehmen, die den nächstkommenden Stand der Technik darstellt.

Die DE 33 05 604 A1 beschreibt eine Wasserauslaufsicherung für zentrale Heizungsanlagen, die aus einem Rohrzylinder mit einer als Ventilsitz ausgebildete, innenliegenden Schulter, auf der eine Ventilkugel aufliegt, besteht. Zweck der beschriebenen Ventilanordnung bestehen darin, dass die Kugel mit einer vorgebbaren Anpresskraft in den Ventilsitz für eine fluiddichte Abdichtung gepresst wird, um einen Rücklauf von Heizwasser aus einem Plattenheizkörper im statischen Druckbetrieb zu vermeiden. Ein Öffnen des Rückschlagventils findet statt, sobald der auf die Kugel lastende Vorlaufwasserdruck genügend groß ist, um die Kugel gegen die entsprechende Anpresskraft aus dem Ventilsitz vollständig abzuheben und das Durchströmen der Wasserauslaufrichtung zu ermöglichen.

Die US 2006/0102234 A1 befasst sich mit der Erzeugung einer pulsierenden Gas-oder Fluidströmung. Hierzu wird eine Strömungsunterbrechungseinheit eingesetzt, die im Wesentlichen aus einem erweiterten Rohrabschnitt besteht, in dem eine mit einem Federelement gegen die Strömung abgestützte Ventilkugel, die ferromagnetische Materialanteile enthält, eingebracht ist. Die Rückstellkraft, mit der die Ventilkugel beim Verschließen des Einlassrohres gegen einen Ventilsitz gedrückt wird, besteht somit aus der Überlagerung von Federkraft und einer von äußeren Magneten erzeugten Magnetkraft. Die Ventilkugel wird jedoch über Feder- oder Magnetkraft ausschließlich axial zur Strömungsachse der Strömungsunterbrechungseinheit ausgelenkt.

Die Druckschrift DE-A-914 086 beschreibt ein Rückschlagventil mit einem Ventilkörper aus nicht magnetischem Werkstoff, in dem sich eine magnetische Rückschlagkugel befindet, die auf einem magnetischen Sitzkörper ruht. Bei höherem Druck wird die Kugel gegen die magnetische Kraft und die Schwerkraft angehoben, so dass sich das Ventil öffnet. Als Sicherung gegen einen zu großen Hub der Kugel ist ein Begrenzungsstift vorgesehen, der verhindert, dass die Kugel stromab verloren geht. Im geschlossenen Zustand ist der Anpressdruck abhängig vom Eigengewicht der Kugel sowie von der Größe der Absperrteile und dem Grad ihrer magnetischen Sättigung.

Die Druckschrift DE-A-1 001 073 B offenbart ein elektromagnetisches Ventil, das als Strömungskanal einen durchbohrten Permanentmagnetkern aufweist, der Teil eines Topfmagneten ist. Als abgehende Leitung ist ein ferromagnetisches Rohrstück angekoppelt, das zusammen mit einer magnetischen Kugel im geschlossenen Zustand des Ventils einen geschlossenen magnetischen Kreis bildet. Hierbei sitzt die Kugel in einem ringförmig ausgebildeten Ventilsitz, der zu Zwecken einer Zentrierung der Kugel beim Verschließen des Ventils von einer schrägen Fläche umgeben ist. Im geöffneten Zustand des Ventils löst sich die Kugel vollständig vom Ventilsitz sowie von der den Ventilsitz umgebenden schrägen Fläche ab und wird von einem eingeschraubten Stift gegen Verlust längs des Kanals zurückgehalten.

### Darstellung der Erfindung

Der Erfindung liegt die Aufgabe zugrunde, eine Magnetventileinheit zum Unterbrechen oder Freigeben eines Durchflusses eines Mediums längs eines Hohlkanals nach den Merkmalen des Oberbegriffes des Anspruches 1 derart weiterzubilden, dass einerseits der Aufbau gattungsgemäßer Magnetventile vereinfacht und darüber hinaus dafür Sorge getragen werden soll, dass die Dosierung, mit der ein Medienaustrag erfolgt, mit vergleichbarer oder besserer Qualität vorgenommen werden kann, als es mit bisher bekannten Magnetventileinheiten möglich ist. Insbesondere soll dafür Sorge getragen werden, dass die Gefahr eines Nachtropfens bei Verschließen der Magnetventileinheit vollständig ausgeschlossen werden kann. Neben einem geforderten einfachen und daher auch kostengünstigen Aufbau für das neuartige Magnetventilskonzept, gilt es zudem auch ein Magnetventil zu schaffen, das miniaturisiert ausgeführt werden kann und über eine hohe Integrationsfähigkeit verfügen soll.

Durch die hohe Integrationsfähigkeit soll eine Vielzahl diverser neuartiger Anwendungsmöglichkeiten geschaffen werden.

Die Lösung der der Erfindung zugrunde liegenden Aufgabe ist im Anspruch 1 angegeben. Lösungsgemäße Verwendungen sind Gegenstand der Ansprüche 12ff. Die den Erfindungsgedanken vorteilhaft weiterbildende Merkmale sind Gegenstand der Unteransprüche sowie der Erfindung, insbesondere unter Bezugnahme auf die Beschreibung der Ausführungsbeispiele zu entnehmen.

Die lösungsgemäße Magnetventileinheit zum Unterbrechen oder freigeben eines Durchflusses eines Mediums längs eines Hohlkanals, das druckbeaufschlagt längs des Hohlkanals strömt, mit wenigstens einer längs des Hohlkanals fest angeordneten ersten Magneteinheit, die hohlzylinderförmig ausgebildet und in einem axialen Abschnitt längs des Hohlkanal derart angeordnet ist, dass die erste Magneteinheit den Hohlkanal radial vollständig umschließt und an ihrem stromabwärtigen Ende eine im Querschnitt kreisförmige Strömungsöffnung aufweist, sowie einer zur ersten Magneteinheit beweglich gelagerten, als Kugel ausgebildeten zweiten Magneteinheit, deren Kugeldurchmesser größer ist als der Strömungsöffnungsdurchmesser der ersten Magneteinheit und die aufgrund einer zwischen beiden Magneteinheiten herrschenden anziehenden Magnetkraft in mittel- oder unmittelbaren Kontakt mit der ersten Magneteinheit bringbar ist und dabei den Hohlkanal fluiddicht abdichtet, während das Medium Druckbeaufschlagt entgegen der Wirkrichtung der Magnetkraft auf die zweite Magneteinheit lastet, zeichnet sich dadurch aus, dass an der im Querschnitt kreisförmigen Strömungsöffnung mittelbar oder unmittelbar eine gegenüber einer der Strömungsöffnung zuordenbaren Ebene angewinkelte, die Strömungsöffnung umgebende Konturfläche anschließt, längs der die kugelförmig ausgebildete zweite Magneteinheit axial und radial relativ zur Strömungsöffnung auslenkbar ist, so dass die zweite Magneteinheit in einer geöffneten Stellung unabhängig von der Druckbeaufschlagung des Mediums stets im körperlichen Kontakt mit der Konturfläche bleibt.

Lösungsgemäß ist erkannt worden, dass es keinerlei weiterer Vorkehrungen bedarf, um zu verhindern, dass die bewegliche zweite Magneteinheit vom Strömungsdruck des durch die Magnetventileinheit durchströmenden Mediums in Strömungsrichtung mitgerissen wird, zumal die als Kugel ausgebildete zweite Magneteinheit seitllich längs der die Strömungsöffnung umgebenden Konturfläche ausweichen kann. Jegliche stromab zur Magnetventileinheit vorzusehende Sicherungsmechanismen gegen eine unkontrollierte Eritfernung der zweiten Magneteinheit vom Magnetventil, wie dies beim Stand der Technik der Fall ist, werden durch die lösungsgemäße Maßnahme überflüssig.

Befindet sich das lösungsgemäß ausgebildete Magnetventil im sogenannten Ruhezustand, in dem der längs des Magnetventils anliegende Strömungsdruck des Mediums, der auf die kugelförmig ausgebildete zweite Magneteinheit lastet, unterhalb der zwischen der ersten und zweiten Magneteinheit wirkenden magnetischen Anziehungskraft liegt, so bleibt das Magnetventil geschlossen, d.h. die kugelförmig ausgebildete zweite Magneteinheit schließt fluiddicht am kreisförmigen Strömungsöffnungsrand der ersten Magneteinheit ab. Ein definiertes Erhöhen des Strömungs- bzw. Förderdruckes des Mediums längs des Hohlkanals über die zwischen beiden Magneteinheiten wirkende magnetische Anziehungskraft führt zu einem selbsttätigen Öffnen des Magnetventils. Hierbei klappt bzw. rollt die kugelförmige zweite Magneteinheit längs der sich mittelbar oder unmittelbar radial an die kreisförmige Strömungsöffnung der hohlzylinderförmig ausgebildeten ersten Magneteinheit anschließenden Konturfläche seitlich weg und gibt damit den Strömungsweg durch die Magnetventileinheit frei. Lösungsgemäß ist die die Strömungsöffnung mittel- bzw. unmittelbar radial umgebende Konturfläche gegenüber einer durch die Strömungsöffnung definierten Ebene angewinkelt ausgebildet, vorzugsweise schließt sich die Konturfläche in Strömungsrichtung trichterförmig bzw. konisch aufweitend an die Strömungsöffnung an, so dass die kugelförmig ausgebildete zweite Magneteinheit durch die strömungsinduzierte Öffnungskraft sowohl radial als auch axial zur Strömungsöffnung weggedrängt wird. Zudem trägt die kreisförmige Strömungsöffnung und die sich in Strömungsrichtung an die Strömungsöffnung anschließende trichterförmig bzw. konisch aufweitende Konturfläche dazu bei strömungstechnische Toträume zu vermeiden, in denen sich Luftblasen ausbilden und ablagern könnten. Aufgrund der durch runde Formen bestimmten geometrischen Gegebenheiten im Bereich der Strömungsöffnung können verlustreduzierte Strömungseigenschaften gewonnen werden, die zu einer besonders guten Mengendosierung insbesondere bei der Abgabe von Kleinstmengen beitragen.

An dieser Stelle ist festzuhalten, dass in der geöffneten Stellung unabhängig von der Stärke der strömungsbedingten Öffnungskraft die kugelförmig ausgebildete zweite Magneteinheit stets im körperlichen Kontakt mit der die Strömungsöffnung umgebenden Konturfläche bleibt und keineswegs von der die Magnetventileinheit durchsetzenden Medienströmung in Strömungsrichtung mitgerissen wird. Die gegenüber der durch die Strömungsöffnung definierte Ebene angewinkelte Ausbildung der Konturfläche, die sich vorzugsweise trichterförmig bzw. in Strömungsrichtung sich konisch aufweitend an die Strömungsöffnung der ersten Magneteinheit anschließt bietet für die kugelförmig ausgebildete zweite Magneteinheit eine Art Rampenfläche, längs der die kugelförmig ausgebildete zweite Magneteinheit axial und zugleich auch radial relativ zur Strömungsöffnung bei überhöhtem Strömungsdruck im Wege eines Verdrängungsvorganges ausgelenkt wird.

Für den Trichteröffnungswinkel α gilt grundsätzlich 0° < α < 90°, wobei der Trichteröffnungswinkel α als Winkel zu verstehen ist zwischen der axialen Längsachse des von der ersten Magneteinheit eingeschlossenen Hohlkanals und einer in der Konturfläche liegenden und die Längsachse des Hohlkanals schneidenden Gerade. Die Wahl des Trichteröffnungswinkels α ist in Abhängigkeit von den Dimensionierungen der kreisförmigen Strömungsöffnung der ersten Magneteinheit sowie der kugelförmig ausgebildeten zweiten Magneteinheit zu wählen und hängt darüber hinaus auch von der Art des die Magnetventileinheit durchsetzenden Mediums ab, das flüssig, gasförmig oder viskos sein kann. Bevorzugte Winkel für α betragen zwischen 10° und 50°.

Insbesondere im Hinblick auf die Realisierung einer schnell ansprechenden Magnetventileinheit, die darüber hinaus kleinste Mengen, bspw. im Milli-, Mikro- oder Nano-Liter-Bereich, an Medium zu deponieren vermag, sind die vorstehenden Designparameter derart abzustimmen, dass bereits geringfügige Variationen des Förderdruckes um die zwischen beide Magneteinheiten wirkende magnetische Haltekraft einen hochfrequenten Wechsel zwischen einer geöffneten und geschlossenen Ventilstellung erlauben.

Insbesondere beim Wiederverschluß des Magnetventils gilt es Vorsorge dafür zu treffen, dass die axial und seitlich ausgelenkte, kugelförmig ausgebildete zweite Magneteinheit bei Absenken des Förderdruckes schnell und exakt eine Position einnimmt, in der sie die Strömungsöffnung der ersten Magneteinheit fluiddicht abschließt. Bei diesem Vorgang gilt es selbst zentrierende, trägheitsbedingte Schwingungsbewegungen der kugelförmig ausgebildeten zweiten Magneteinheit auf dem Öffnungsrand der Strömungsöffnung zu vermeiden. Durch die lösungsgemäß ausgebildete angewinkelte, die Strömungsöffnung umgebende Konturfläche kann dieses Phänomen ausgeschlossen werden, so dass jegliches Nachtropfen während des Schließvorganges der Magnetventileinheit vermieden werden kann.

Zur Ausbildung einer lösungsgemäß ausgebildeten Magnetventileinheit bieten sich unterschiedliche Ausführungsformen an, eine einfachste Ausführungsform sieht die Ausbildung der ersten Magneteinheit in einstückiger Bauweise vor, d.h. die zylinderförmige Grundform verfügt an ihrem stromabwärtigen Ende über die gegenüber der von der Strömungsöffnung definierten Ebene angewinkelt ausgebildete Konturfläche. In bevorzugter Weise ist die erste Magneteinheit aus permanent magnetischem Material gefertigt, so dass nicht notwendigerweise die zweite Magneteinheit auch aus einem permanent magnetischem Material gefertigt sein muss, vielmehr ist es möglich, die kugelförmig ausgebildete zweite Magneteinheit aus einem ferromagnetischem Material bereit zu stellen. Gleichsam sei an dieser Stelle darauf hingewiesen, dass die lösungsgemäß ausgebildete Magnetventileinheit auch durch Vorsehen einer aus ferromagnetischem Material gefertigten ersten Magneteinheit und einer aus permanent magnetischem Material gefertigten kugelförmig ausgebildeten zweiten Magneteinheit ausgebildet werden kann.

Im Unterschied zur vorstehend skizzierten einfachen Ausführungsform sieht eine weitere Ausführungsform die trichterförmige Endform als eine getrennt zur ersten, hohlzylinderförmig ausgebildeten Magneteinheit separate Komponente vor, die vorzugsweise aus einem nicht magnetischen Material besteht. Eine derartige auch im Weiteren als Distanzelement bezeichnete Komponente trägt dazu bei, die zwischen beiden Magneteinheiten herrschende magnetische Anziehungskraft in gewissen Bereichen anzupassen und darüber hinaus durch geeignete Materialwahl die Fluiddichtheit des Magnetventils in der geschlossenen Stellung zu verbessern.

Auch ist es möglich, die kugelförmig ausgebildete zweite Magneteinheit oberflächig mit einer die Fluiddichtheit in der geschlossenen Magnetventilstellung verbessernden Oberflächenbeschichtung zu versehen, beispielsweise mit einer geeigneten elastischen Materialschicht, wie beispielsweise Kunststoff oder Gummi. Auch eignet sich zur Verbesserung der Fluiddichtheit eine Anfasung des die Strömungsöffnung unmittelbar umgebenden Öffnungsrandes längs der ersten Magneteinheit bzw. des vorstehend geschilderten Distanzelementes.

Ein weiteres Ausführungsbeispiel der lösungsgemäß ausgebildeten Magnetventileinheit sieht unmittelbar an die Strömungsöffnung einen in der Ebene der Strömungsöffnung befindlichen, ringförmig ausgebildeten Flächenabschnitt vor, an dessen radialen Umfangsrand die gegenüber der Ebene der Strömungsöffnung angewinkelte Konturfläche sich in Strömungsrichtung konisch aufweitend angrenzt. Durch diese Maßnahme wird der Öffnungsvorgang erleichtert und kann zeitlich schneller erfolgen, zumal bei Überschreiten der durch den Förderdruck iniziierten Öffnungskraft über die magnetische Haltekraft zwischen beiden Magneteinheiten, die kugelförmig ausgebildete zweite Magneteinheit zunächst im Wesentlichen nur radial zur Strömungsöffnung seitlich ausgelenkt wird, bevor die kugelförmig ausgebildete Magneteinheit in Kontakt mit der angewinkelten Konturfläche zur weiteren radialen und axialen Auslenkung gerät. Zum anderen gewährleistet der ringförmige Flächenabschnitt, dass die kugelförmig ausgebildete, zweite Magneteinheit an einem scharfkantig ausgebildeten, die Strömungsöffnung umgebenden Umfangsrand längs einer Berührlinie fluiddicht anliegt.

Mit der lösungsgemäßen Magnetventileinheit ist eine Vielzahl von Vorteilen verbunden, die nachfolgend reihenhaft beschrieben sind.

Aufgrund einer vollständig stromlosen Betriebsmöglichkeit der lösungsgemäßen Magnetventileinheit und der einfachen Bauform, bei der lediglich zwei miteinander in Wirkverbindung bringbare Komponenten erforderlich sind, eröffnen sich nicht zuletzt auch wegen der Miniaturisierbarkeit des Magnetventils vielfältige Integrationsmöglichkeiten in bestehende Fluidsysteme. Besonders vorteilhaft sind die mögliche Anordnung des Ventils in unmittelbarer Nähe der Auslassöffnung von Dosierssystemen und die damit erreichbare Reduzierung des nicht definiert förderbaren Restvolumens im Anschluss an das Ventil. Auch können jegliche Probleme, die mit einer elektrischen Energieversorgung verbunden wären, vollständig ausgeschlossen werden, wie beispielsweise eine sich auf die Viskosität des Mediums auswirkende Erwärmung.

Der Schließvorgang des Magnetventils erfolgt in einer Weise, bei der die kugelförmige zweite Magneteinheit aus einer Position stromab zur Strömungsöffnung entgegen der Strömungsrichtung durch die magnetische Anziehungskraft an die Strömungsöffnung getrieben wird und diese fluiddicht abschließt. Durch die Rückstellung entgegen der Strömungsrichtung unterstützt durch die strömungstechnisch günstige Geometrie der zweiten Magneteinheit wird ein Druckimpuls auf das zwischen Ventil und Auslassöffnung vorhandenen Medium, welcher zu einem Nachtropfen führen würde, vermieden.

Die hohe Dichtigkeit, mit der die Magnetventileinheit abschließt, kann zusätzlich erhöht werden, indem im Bereich der Strömungsöffnung entweder direkt an der ersten Magneteinheit oder an dem aufgesetzten Distanzelement eine Art Dichtlippe, beispielsweise durch Aufbringen eines Dichtungsmaterials am Öffnungsrand der Strömungsöffnung, vorgesehen wird. Die gleiche Maßnahme kann an der kugelförmig ausgebildeten zweiten Magneteinheit getroffen werden, indem diese, wie bereits vorstehend erwähnt, oberflächig mit einer entsprechenden Dichtschicht versehen wird.

Durch die hohlzylinderförmig ausgebildete Geometrie der ersten Magneteinheit, die einseitig durch die kugelförmig ausgebildete zweite Magneteinheit verschließbar ist, werden jegliche Toträume und Hinterschneidungen vermieden, wodurch die Einlagerungen von Luftblasen oder die Ausbildung von Rezirkulationsströmungen innerhalb der Magnetventilanordnung ausgeschlossen werden können.

Der einfache Aufbau der lösungsgemäß ausgebildeten Magnetventileinheit gestattet eine direkte und kostengünstige Integration in gängige Produkte, beispielsweise in Verpackungen, wie beispielsweise Tuben, Behälter, Beutel, Dosen etc., die beispielsweise im Wege der Spritzgusstechnik hergestellt werden. Durch die kostengünstige Herstellbarkeit der lösungsgemäßen Magnetventileinheit eröffnet sich die Möglichkeit für den Einsatz in adaptierbare Einweg-Komponenten, die gleichsam auch in Spritzgusstechnik herstellbar sind, wie beispielsweise Kartuschen oder Vergleichbares. Die bereits angesprochene Möglichkeit der Miniaturisierung ermöglicht eine Vielfachanordnung der Magnetventileinheit mit flächig arrayförmiger Verteilung, die bspw. zur Flächenschmierung zwischen wenigstens zwei Roll-bzw. Gleitkörpern dient. Weitere Einzelheiten hierzu sind der nachfolgenden Beschreibung unter Bezugnahme auf die Ausführungsbeispiele zu entnehmen.

Grundsätzlich lässt sich die lösungsgemäß ausgebildete Magnetventileinheit zum mengendosierten Austrag flüssiger, pastöser sowie auch gasförmiger Medien einsetzen sowie für Medien, die über eine heterogene Konsistenz verfügen, beispielsweise Flüssigkeiten oder viskose Stoffe, in denen Festkörperpartikel eingelagert sind. Neben der bereits erwähnten hohen Robustheit der lösungsgemäß ausgebildeten Magnetventileinheit ist auch ihre geringe Störanfälligkeit hervorzuheben, zumal das Magnetventil lediglich aus zwei maximal drei Komponenten zusammengesetzt ist.

Für einen mengendosierten Medienaustrag durch die lösungsgemäß ausgebildete Magnetventileinheit bedarf es einer gezielten Auslenkung der kugelartig ausgebildeten zweiten Magneteinheit relativ zur Strömungsöffnung der ersten Magneteinheit respektive zum Distanzelement. Grundsätzlich stehen für eine derartige kontrollierte Auslenkung der kugelförmig ausgebildeten Seitenmagneteinheit drei unterschiedliche Funktionsmechanismen zur Verfügung.

Zum einen kann der Förderdruck, mit dem das Medium druckbeaufschlagt längs des Hohlkanals durch die Magnetventileinheit gefördert wird, mit Hilfe einer Förderpumpe gezielt variiert werden. Wird der Förderdruck über die magnetische Haltekraft, die zwischen beiden Magneteinheiten wirkt erhöht, so öffnet sich das Ventil, wird der Förderdruck hingegen gegenüber der magnetischen Haltekraft abgesenkt, so schließt das Ventil selbsttätig.

Eine zweite Variante sieht die Präsenz eines externen Magnetfeldes vor, durch das die zwischen beiden Magneteinheiten der Ventileinheit wirkende magnetische Haltekraft gegenüber dem anliegenden Förderdruck des Mediums weitgehend kompensiert wird, so dass der Förderdruck die kugelartig ausgebildete Magneteinheit aus der geschlossenen Ruhelage auszulenken in der Lage ist. Das zur Kompensation erforderliche externe Magnetfeld kann durch räumliches Annähern zwischen Magnetventileinheit und einer externen Magneteinheit, beispielsweise in Form eines Permanentmagneten oder Elektromagneten erfolgen. In diesem Fall wird das Öffnen und Schließen der Magnetventileinheit nicht durch Variation des Förderdruckes längs des Medienstromes, sondern durch kontrollierte Annäherung der Magnetventileinheit relativ zu einer externen Magnetfeldquelle realisiert.

Eine dritte Alternative sieht gleichsam zur ersten Alternative eine Variation des Förderdruckes längs des Medienstromes vor, jedoch wird dieser nicht durch eine Förderpumpe, sondern vielmehr mit Hilfe einer Bypass-Staudruckdüse variiert. Im Einzelnen sei hierzu angenommen, dass das durch die Magnetventileinheit auszubringende Medium in einer Kartusche bevorratet ist, die mit einer Dispensernadel verbunden ist, wobei zwischen der Kartusche und der Dispensernadel die lösungsgemäß ausgebildete Magnetventileinheit vorgesehen ist. Die Kartusche ist von einer Kolbeneinheit abgeschlossen, auf der ein vorgegebener Luftstaudruck wirkt, der von einer Luftdruckquelle herrührt. Zur Variation des Luftstaudruckes ist zwischen der Luftdruckquelle und der Kolbeneinheit eine Bypassleitung vorgesehen, die parallel zur Dispensernadel, durch die der Medienaustrag dosiert erfolgt, verläuft und deren offenes Ende in einer gemeinsamen Ebene zur Dispensernadelöffnung mündet. Nähert sich die Dispensernadel und damit verbunden das offene Ende der Bypass-Leitung einer Substratoberfläche an, auf der dosiert ein Medienaustrag zu erfolgen hat, erhöht sich mit geringer werdendem Düsenabstand der auf die Kolbeneinheit lastende Luftstaudruck, da ein freies Ausströmen von Luft durch die Bypaßleitung durch die Annäherung an die Substratoberfläche behindert wird und dadurch ein erhöhter Staudruck auf die Kolbeneinheit wirkt, der zum Öffnen des Magnetventils führt. Beim Abheben bzw. Entfernen der Düsenanordnung von der Substratoberfläche verringert sich der auf die Kolbeneinheit lastende Luftstaudruck, da die der Strömungsweg durch die Bypaßleitung wieder frei gegeben wird, wodurch letztlich das Ventil selbsttätig schließt.

Die konstruktive Ausbildung der lösungsgemäßen Magnetventileinheit sowie bevorzugte Verwendungsbeispiele werden nachstehend unter Zugrundelegung konkreter Ausführungsbeispiele näher erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierter Längsschnitt durch eine lösungsgemäß ausgebildete Magnetventileinheit,
- Fig. 2a, b: Längsschnitte durch eine alternative Ausbildung einer lösungsgemäß ausgebildeten Magnetventileinheit in geschlossener und geöffneter Stellung,
- Fig. 3a,b,c: Explosionsdarstellung einer lösungsgemäß ausgebildeten Magnet- ventileinheit, b) + c) zeigen Ausführungsbeispiel hergestellt mittels Spritzgusstechnik
- Fig. 4: modulare Implementation einer Magnetventileinheit längs eines Schlauchabschnittes,
- Fig. 5: Längsschnitt durch eine Dispensernadelanordnung mit integrierter Magnetventileinheit,
- Fig. 6a, b: Darstellungen einer in einer Kartuscheneinheit integrierten Magnetventileinheit,
- Fig. 7a, b: Darstellung einer in einem Tubenkopf integrierten Magnetventileinheit,
- Fig. 8: Substratfläche mit arrayförmig verteilt angeordneten Magnetventileinheiten mittels externer Magnetfeldventilauslösung,
- Fig. 9: arrayförmig verteilt angeordnete Magnetventilanordnung längs einer Substratträgerfläche mit druckbeaufschlagtem Medienvolumen,
- Fig. 10: Längsschnitt durch ein Behältnis mit einem Deckschlusselement mit einer lösungsgemäß ausgebildeten Magnetventileinheit,
- Fig. 11: Gefäß mit einer Eintritts- und Austrittsöffnung, jeweils versehen mit einer lösungsgemäß ausgebildeten Magnetventileinheit,
- Fig. 12: Mischeranordnung mit mehreren Magnetventilen, sowie
- Fig. 13: Folienartig ausgebildete Magnetventilanordnung.

### Wege zur Ausführung der Erfindung, gewerbliche Verwendbarkeit

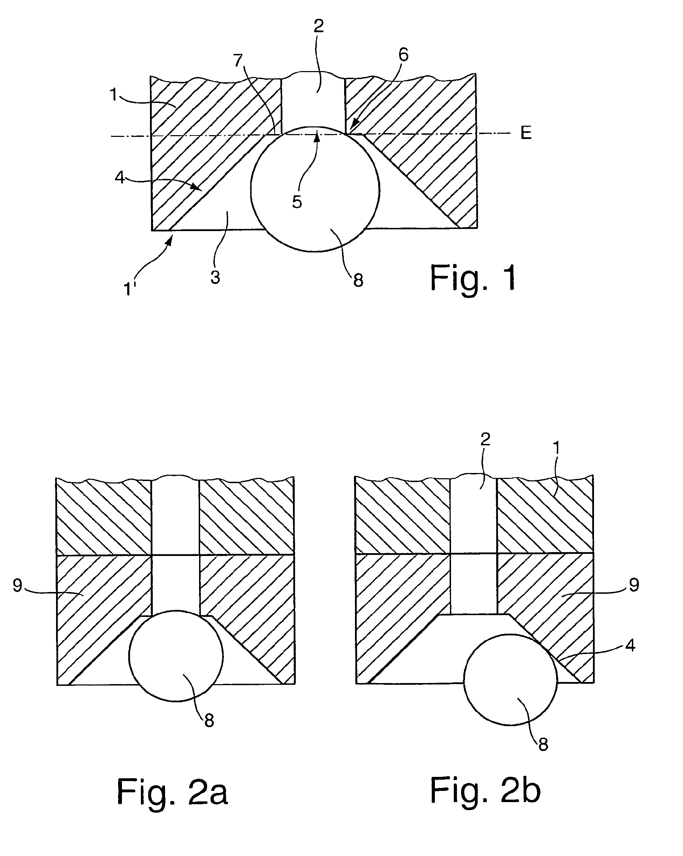

Figur 1 stellt einen schematischen Längsschnitt durch eine einfachste Ausführungsform einer lösungsgemäß ausgebildeten Magnetventileinheit dar, die eine, vorzugsweise aus permanentmagnetischem Material bestehende erste Magneteinheit 1 aufweist, die über eine hohlzylinderförmige Grundform verfügt und einen inneren Hohlkanal 2 umschließt. Die erste Magneteinheit 1 weist ein stromabwärtiges Ende 1' auf, das über eine trichterförmige Ausnehmung 3 verfügt. Die trichterförmige Ausnehmung 3 ist seitlich begrenzt durch eine gegenüber der in Figur 1 eingezeichneten Ebene E angewinkelt orientierte Konturfläche 4, die zugleich die Oberfläche der ersten Magneteinheit 1 darstellt. Längs der Ebene E befindet sich die Strömungsöffnung 5 des Hohlkanals 2, die einen kreisförmigen Querschnitt besitzt und von einem scharfkantigen, kreislinienartig ausgebildeten Umfangsrand 6 umgeben ist. Radial unmittelbar am Umfangsrand 6 angrenzend ist ein ringförmiger Flächenabschnitt 7 vorgesehen, der sich in der gleichen Ebene E erstreckt, wie die Strömungsöffnung 5. Nicht notwendiger Weise ist ein derartiger Flächenabschnitt 7 vorzusehen.

Zum einseitigen Abschluss des Hohlkanals 2 ist eine kugelförmig ausgebildete, zweite Magneteinheit 8 vorgesehen, deren Kugeldurchmesser größer bemessen ist, als der Öffnungsquerschnitt der Strömungsöffnung 5. Die zweite Magneteinheit 8 besteht aus einem permanentmagnetischen oder ferromagnetischem Material, so dass zwischen der Magneteinheit 1 und der Magneteinheit 8 eine gegenseitig anziehende magnetische Kraft herrscht. In einer in Figur 1 dargestellten Ruheposition nimmt die gegenüber der Magneteinheit 1 vollkommen frei gelagerte zweite Magneteinheit 8 die in der Figur 1 dargestellte Position ein und schließt fluiddicht den Hohlkanal 2 am Umfangsrand 6 ab.

Im Weiteren sei angenommen, dass das in Figur 1 dargestellte Magnetventil zum kontrollierten Medienaustrag verwendet wird. Hierzu wird der in Figur 1 dargestellte Hohlkanal 2 mit einem entsprechenden Medienreservoir (nicht dargestellt) verbunden, so dass längs des Hohlkanals 2 in Richtung auf die kugelförmig ausgebildete zweite Magneteinheit 8 eine entgegen der zwischen beiden Magneteinheiten 1 und 8 wirkende magnetische gegenseitige Anziehungskraft gerichtete Druckkraft herrscht.

Übersteigt die vermittels des Mediums auf die zweite Magneteinheit 8 lastende Druckkraft die magnetische Haltekraft, so weicht die zweite Magneteinheit 8 axial und radial seitlich zum Hohlkanal 2 aus, d.h. die Magneteinheit 8 wird regelrecht längs der sich trichterförmig erstreckenden Konturfläche 4 verschoben.

In Figur 2a und b sind Längsschnitte durch eine weitere Ausführungsform einer lösungsgemäß ausgebildeten Magnetventileinheit dargestellt, wobei Figur 2a den geschlossenen und Figur 2b einen geöffneten Ventilzustand illustrieren. In beiden Fällen ist im Gegensatz zum Ausführungsbeispiel gemäß Figur 1 unmittelbar an der ersten Magneteinheit 1 ein Distanzelement 9 vorgesehen, das in vorteilhafter Weise aus einem nichtmagnetischem Material besteht und gleichsam dem stromabwärtigen Ende 1' gemäß dem Ausführungsbeispiel in Figur 1 eine trichterförmig ausgebildete Ausnehmung 3 aufweist. Das Distanzelement 9 dient im Wesentlichen als Einstellmöglichkeit für die zwischen beiden Magneteinheiten 1 und 8 herrschende magnetische Anziehungskraft. So kann diese vermindert werden, indem ein möglichst dickes Distanzelement 9 verwendet wird. In Figur 2a ist eine geschlossene Magnetventilstellung dargestellt, in Figur 2b sei angenommen, dass längs des Hohlkanals 2 ein Medium druckbeaufschlagt gegen die zweite Magneteinheit 8 wirkt, so dass diese entgegen der magnetischen Haltekraft sowohl axial als auch radial längs der trichterförmigen Konturfläche 4 ausgelenkt wird, wodurch die Strömungsöffnung 5 des Hohlkanals 2 freigegeben wird und ein freier Medienaustrag ermöglicht wird.

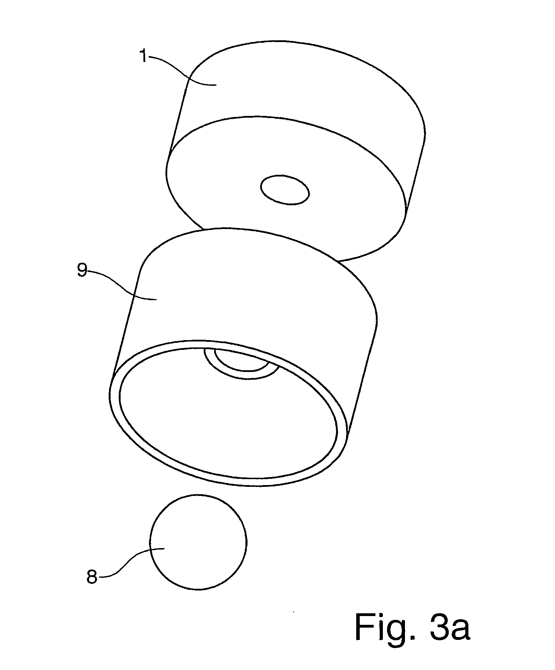

Vermindert sich der Förderdruck mit dem das Medium längs des Hohlkanals 2 gefördert wird unter den Betrag der sich zwischen beiden Magneteinheiten herrschenden magnetischen Anziehungskraft, so gleitet die zweite Magneteinheit 8 regelrecht selbstzentrierend längs der schrägen trichterförmigen Konturfläche 4 in Richtung der Strömungsöffnung 5 des Hohlkanals 2 und verschließt diese fluiddicht. In Figur 3a ist eine Explosionsdarstellung einer Magnetventileinheit dargestellt, die aus drei Teilen besteht, nämlich der ersten, hohlzylinderförmig ausgebildeten Magneteinheit 1, dem sich axial daran anschließenden Distanzelement 9 sowie der kugelförmig ausgebildeten zweiten Magneteinheit 8. Wie bereits eingangs erläutert ist das Distanzelement 9 lediglich optional vorzusehen und dient in erster Linie durch geeignete Materialwahl und Dimensionierung einer gezielten Einstellung der zwischen der ersten Magneteinheit 1 und der zweiten Magneteinheit 8 wirkenden magnetischen Anziehungskraft.

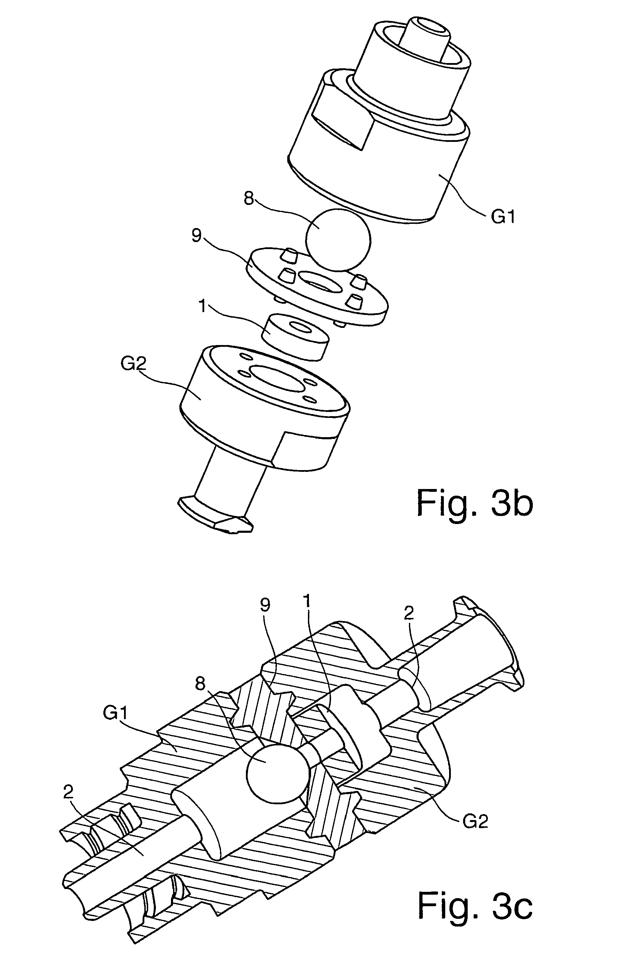

Die Figuren 3b und 3c, die gleichsam ein lösungsgemäßes Magnetventil mit einer hohlzylinderförmig ausgebildeten ersten Magneteinheit 1, einem Distanzelement 9 und einer kugelförmig ausgebildeten zweiten Magnetventileinheit 8 zeigen, verdeutlichen den Einsatz des Magnetventils in einem spritzgegossenem Bauteil, das die Magnetventileinheit kapselt. Das Gehäuse besteht aus zwei Spritzgußgehäuseteilen G1 und G2, die vorzugsweise aus thermoplastischem Kunststoff gefertigt sind und schließen jeweils einen Hohlkanal 2 ein, längs dem die lösungsgemäß ausgebildete Magnetventileinheit in der in Figur 3 b und c ersichtlichen Weise platziert ist. Das Distanzelement 9 ist vorzugsweise farblich markiert bzw. codiert und kann je nach gewünschter magnetischer Haltekraft geeignet dick ausgebildet sein. Zur leichteren Erkennung eines jeweils verwendeten Distanzelementes ist dieses in der zusammengesetzten Form der Ventilbaueinheit von außen in Form eines farblich in Erscheinung tretenden Ringes ersichtlich ( siehe Fig. 3c). Auf diese Weise kann aus einer Vielzahl von gekapselten Magnetventileinheiten, die sich durch die Dicke des jeweiligen Distanzelementes und somit im Ventilöffnungsverhalten unterscheiden ansonsten jedoch baugleich, jeweils ein zum entsprechenden Anwendungszweck passendes Magnetventil ausgewählt werden.

Anhand der Figuren 3 a-c ist der einfache konstruktive Aufbau zu ersehen, der einerseits für eine günstige Herstellung sorgt, andererseits die Möglichkeit der Miniaturisierung und eine damit verbundene Integragtionsmöglichkeit bietet und letztlich Beleg dafür ist, dass das lösungsgemäße Magnetventileinheit verschleißfrei ist und im Betrieb keinerlei Störanfälligkeiten unterliegt.

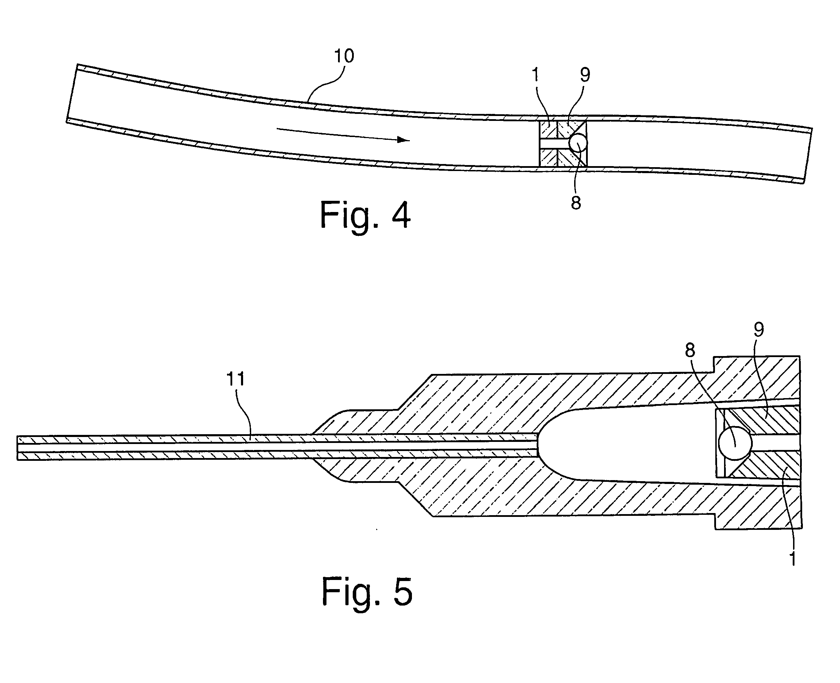

In Figur 4 ist die Integration der lösungsgemäß ausgebildeten Magnetventileinheit längs einer flexibel ausgebildeten Hohlleitung 10 dargestellt. Hierbei sei angenommen, dass längs der Hohlleitung 10 ein Medium in Form einer Flüssigkeit eines viskosen Mediums oder eines Gases in Strömungsrichtung längs der in Figur 4 illustrierten Pfeildarstellung geführt wird. Die erste Magneteinheit 1 sowie das mit dieser fest verbundene Distanzelement 9 sind mit der Innenwand der Hohlleitung 10 fest verbunden. In der in Figur 4 illustrierten Darstellung sitzt die kugelförmig ausgebildete zweite Magneteinheit 8 bündig an der Strömungsöffnung der Magnetventileinheit auf und schließt dieses fluiddicht ab. Übersteigt hingegen der Strömungsdruck die magnetische Anziehungskraft zwischen ersten und zweiten Magneteinheit, so wird die kugelförmig ausgebildete Magneteinheit 8 längs der trichterförmig ausgebildeten Konturfläche 4 ausgelenkt, wodurch die Magnetventileinheit in die geöffnete Stellung überführt wird und ein Strömungsdurchtritt durch die Magnetventileinheit ermöglicht wird.

Figur 5 zeigt eine Längsschnittdarstellung durch eine Dispensernadel 11 längs der stromauf zur Dispensernadel die lösungsgemäße Magnetventileinheit, bestehend aus erster Magneteinheit 1, Distanzelement 9 und der kugelförmig ausgebildeten zweiten Magneteinheit 8 platziert ist. Durch den kleinen Bauraum, der in miniaturisierter Ausbildung von der lösungsgemäß ausgebildeten Magnetventileinheit benötigt wird, ist die Realisierung sogar von kleinsten Dispensernadelanordnungen möglich.

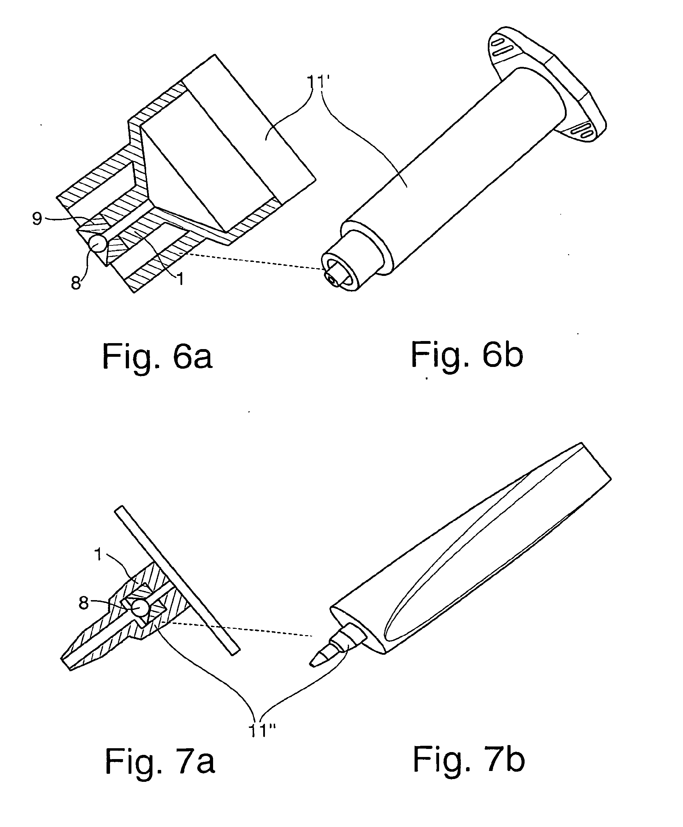

Eine ähnliche Anwendung ist in Figur 6 dargestellt, bei der die Magnetventileinheit kopfseitig an einer Austrittsöffnung einer Kartuscheneinheit 11' für einen dosierten Medienaustrag angebracht ist. Die auch in diesem Falle aus der ersten Magneteinheit 1, dem Distanzelement 9 sowie der kugelförmig ausgebildeten zweiten Magneteinheit 8 bestehende Magnetventileinheit sitzt unmittelbar an der Austrittsöffnung eines Kartuschenkopfes. Es liegt auf der Hand, dass beim Verschließen der Magnetventileinheit kein Nachtropfen des Kartuscheninhaltes erfolgt, da sich unmittelbar nach dem Verschließen der Ventildurchtrittsöffnung kein Materialrest aussenseitig zur kugelförmigen zweiten Magneteinheit 8 haften bleibt.

In Figur 7 ist der Einsatz der lösungsgemäß ausgebildeten Magnetventileinheit im Auslassbereich einer konventionellen Tubenöffnung illustriert, bei der in einfacher Weise innerhalb des Tubenaustrittshalses 11" eine beispielsweise lediglich aus der ersten Magneteinheit 1 und der zweiten kugelförmig ausgebildeten Magneteinheit 8 bestehende, lösungsgemäß ausgebildeten Magnetventileinheit integriert ist. Im Zusammenhang mit konventionellem Klebstofftuben wird der Vorteil der lösungsgemäß ausgebildeten Magnetventileinheit besonders deutlich, zumal die Ventileinheit bei einem kraftbeaufschlagten deformierende Tube selbstständig in einen geöffneten Ventilzustand übergeht und den Tubenaustrittshals selbstständig wiederverschließt, sobald kein Druck auf die Tube ausgeübt wird. Die lösungsgemäß ausgebildete Magnetventileinheit sorgt darüber hinaus zur Vermeidung eines störenden Nachtropfens von Klebstoffresten und hilft ein Aushärten der Tubenöffnung selbst ohne Vorsehen einer Verschlusskappe zu vermeiden.

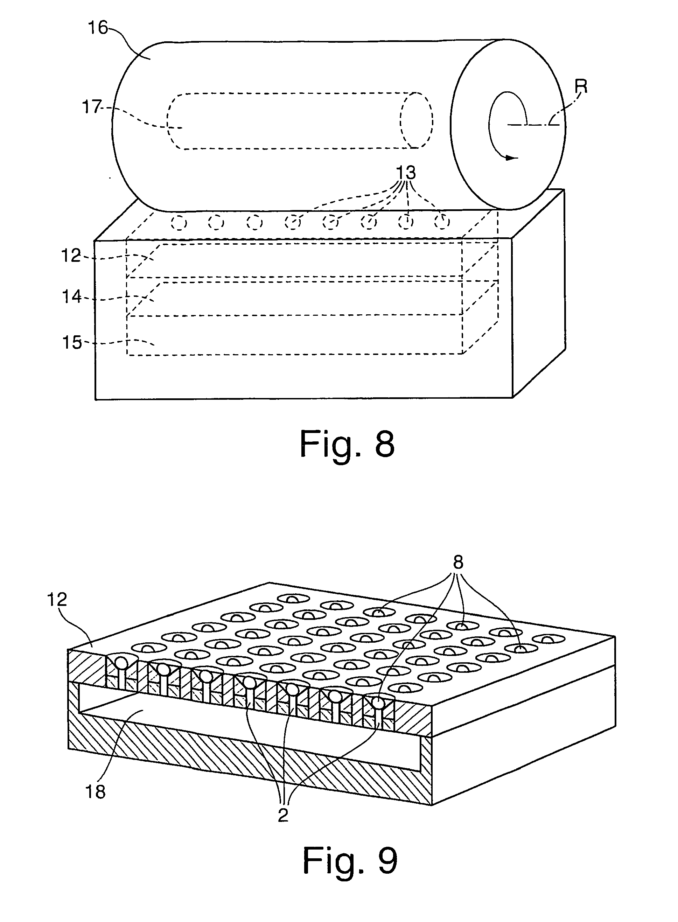

Die Ausführungsbeispiele gemäß der Figuren 8 und 9 demonstrieren weitere Anwendungsmöglichkeiten für eine miniaturisierte Bauform einzelne Magnetventileinheiten. So sei in Figur 8 angenommen, dass längs einer Trägersubstratplatte 12 eine Vielzahl arrayförmig angeordneter, die Trägersubstratplatte 12 vollständig durchsetzende Hohlkanäle 13 vorgesehen ist, in denen jeweils eine lösungsgemäß ausgebildete Magnetventileinheit eingebracht ist. Die Trägersubstratplatte 12 schließt mit ihrer Unterseite ein Mediumreservoirvolumen 14 einseitig ab, in dem beispielsweise viskoser Schmierstoff, beispielsweise Öl etc. enthalten ist. Wiederum unterhalb des Mediumreservoirvolumens 14 ist eine Druckversorgung 15, beispielsweise in Form einer Fördereinrichtung für das in dem Reservoirvolumen 14 enthaltene Medium, bspw. in Form eines Schmierstoffes. Die Druckbeaufschlagung des in dem Mediumreservoirvolumen 14 bevorrateten Schmierstoffs erfolgt derart, dass die innerhalb der Durchführungskanäle 13 enthaltenen Magnetventileinheiten eine geschlossene Ventilstellung einnehmen, jedoch bei nur geringfügiger Druckerhöhung die Magnetventileinheiten in die geöffnete Stellung überführt werden können. Zur kontrollierten Öffnung der einzelnen innerhalb der Hohlkanäle 13 vorgesehenen Magnetventileinheiten sorgt ein oberhalb der Trägersubstratplatte 12 drehbar gelagerter Rollkörper 16, in dem ein stabförmig ausgebildeter Permanentmagnet 17 integriert ist, der ein externes Magnetfeld zu generieren vermag, wodurch bei entsprechender räumlicher Annäherung zu einem innerhalb der Trägersubstratplatte 12 integrierten Magnetventil die kugelförmig ausgebildete zweite Magneteinheit 8 angezogen wird, wodurch die Magneteinheit öffnet. In Anbetracht des Ausführungsbeispiels in Figur 8 liegt es auf der Hand, dass jene in einer Linie angebrachten Magnetventileinheiten jeweils in die geöffnete Stellung überführt werden, sofern der Rollkörper 16 unmittelbar über den entsprechende Magnetventileinheiten abrollt. Entfernt sich der Rollkörper 16 von den entsprechenden Magnetventileinheit, so schwächt sich das externe Magnetfeld ab und die geöffnete Ventilstellung wird in die geschlossene Ventilstellung entsprechend rückgeführt. Das in Figur 8 illustrierte Ausführungsbeispiel findet vorzugsweise Anwendung in selbstschmierenden bzw. fettenden Systemen, in denen wenigstens zwei mechanische Komponenten im gegenseitigen Schleif- bzw. Rollkontakt gelangen.

Figur 9 zeigt eine ähnlich strukturierte Trägersubstratplatte 12 mit einer Vielzahl arrayförmig angeordneter Magnetventileinheiten, unter der sich ein hermetisch abgeschlossenes Flüssigkeitsreservoir 18 befindet. In diesem Fall öffnen die einzelnen Magnetventileinheiten gesamtheitlich bei Überschreiten eines innerhalb des Flüssigkeitsreservoirs 18 eingeleiteten Strömungsdruck, der jeweils von Innen längs des von jeder einzelnen Magneteinheit eingeschlossenen Hohlkanals 2 auf die kugelförmig ausgebildete jeweils zweite Magneteinheit 8 einwirkt. Mit der in Figur 9 illustrierten Vorrichtung lassen sich Gleit- oder Rollflächen bei Lagern flächig dosiert schmieren.

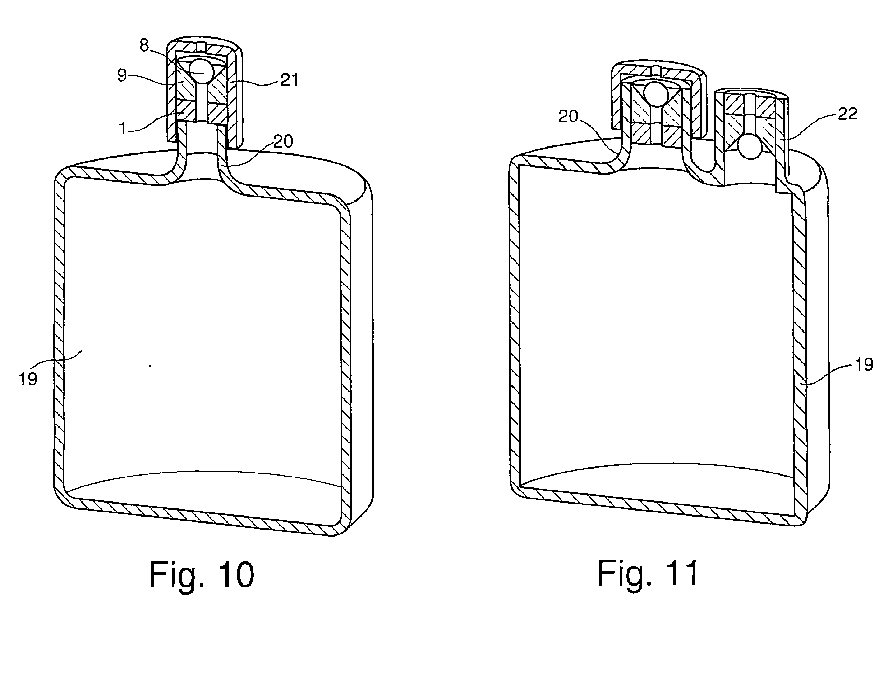

Figur 10 zeigt ein flaschenartiges Behältnis in Längsschnittdarstellung mit einer Flaschenöffnung 20, die mit einem Verschluss 21 versehen ist, in dem eine lösungsgemäß ausgebildete Magnetventileinheit, umfassend die erste Magneteinheit 1, das Distanzelement 9 sowie die kugelförmig ausgebildete zweite Magneteinheit 8, vorgesehen ist. Der Verschluss 21 kann an unterschiedlichen Flaschenöffnungen aufgesetzt werden und stellt somit eine eigenständige Verschlusskappe dar. Zur Betätigung des Flaschenverschlusses sei angenommen, dass die Flaschenwand deformierbar ist, so dass eine innere Druckerhöhung durch Zusammendrücken der Flasche initiiert werden kann.

In Figur 11 ist ein weiteres, flaschenartig ausgebildetes Behältnis dargestellt, mit einem Flaschenauslass 20 sowie einem Flascheneinlass 22. Im Falle des Flaschenauslasses 20 ist eine Magnetventileinheit zum Auslass eines innerhalb der Flasche bevorrateten Mediums vorgesehen, wohingegen längs des Flascheneinlasses 22, beispielsweise zu Zwecken der Belüftung des Flaschenvolumens, ein in umgekehrter Öffnungs- bzw. Schließrichtung eingebrachtes lösungsgemäß ausgebildetes Magnetventil integriert ist. Wieder gilt es die Flasche entsprechend zu deformieren, um die Magnetventile zu öffnen.

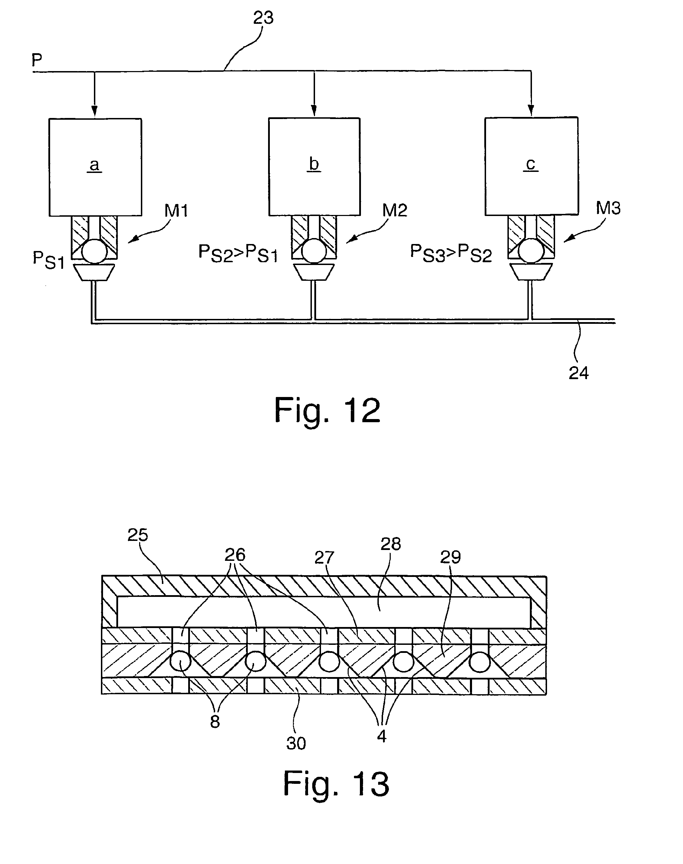

In Figur 12 ist eine Mischeranordnung, die drei Magnetventile M1, M2 und M3 vorsieht. Jedes einzelne Magnetventil ist mit einem Mediumreservoir a, b, c verbunden, in denen jeweils miteinander zu mischende Medien enthalten sind. Über eine gemeinsame Förderdruckleitung 23 lastet auf jedem einzelnen Mediumreservoir a, b, c, derselbe Förderdruck P. Es sei angenommen, dass die Magnetventile a, b, c über unterschiedliche Ventilöffnungskräfte verfügen, die mit Hilfe der vorstehend beschriebenen Designparameter zur Ausbildung für die erste und zweite Magneteinheit 1, 8 bzw. falls vorhanden für das zusätzliche Distanzelement, eingestellt werden können. So öffnet beispielsweise das Magnetventil M1 bei Anliegen eines Förderdruckes P_{S1}, wohingegen die Magnetventile M2 und M3 geschlossen bleiben. Infolgedessen gelangt das Medium aus dem Mediumreservoir a bei geöffneter Ventilstellung in die Sammelleitung 24.

Wird der Förderdruck P weiter erhöht und überschreitet einen Förderdruck P_{S2}, so öffnet zusätzlich das Magnetventil M2, wobei das Magnetventil M3 weiterhin geschlossen bleibt. In diesem Fall kommt es zu einer Mischung der Medien aus den Medienreservoirs a und b längs der Sammelleitung 24.

Wird der Förderdruck nochmals erhöht und überschreitet einen Förderdruck P_{S3}, so öffnet auch das Magnetventil M3 und es kommt zu einer Mischung sämtlicher bevorrateter Medien a, b, c längs der Sammelleitung 24.

Die Mischeranordnung gemäß Figur 12 verdeutlicht ein Mischprinzip für unterschiedliche Medien, das ausschließlich auf der Variation eines Förderdruckes längs einer Förderdruckleitung beruht, wobei die für ein Öffnen und Schließen eines Magnetventils kritischen Öffnungskräfte ausschließlich durch vorbestimmte Designparameter für die Ausbildung der einzelnen Magnetventile festgelegt sind. Ein zusätzlicher Regelungsmechanismus, der elektrische Energie benötigt, ist nicht erforderlich.

Das in Figur 13 dargestellte Ausführungsbeispiel einer Magnetventilanordnung zeigt einen Querschnitt durch eine zeilen- oder arrayförmige Anordnung einer Vielzahl einzelner Magnetventile, die jeweils mittels Folientechnik realisiert sind. So umschließt eine Reservoir-Folie 25 eine mit Durchgangsöffnungen 26 perforierte Magnet-Folie 27 und schließt mit dieser ein Reservoirvolumen 28 ein, das mit einem Fluid oder Gas befüllbar ist (nicht dargestellt). Flächig bündig zur Magnetfolie 27 schließt eine Ventilsitz-Folie 29 an, jeweils mit fluchtend zu den Durchgangsöffnungen 26 vorgesehenen Öffnungen, an denen sich jeweils die lösungsgemäß ausgebildete Kontaktfläche 4 anschließt, längs der eine jeder Magnetventileinheit zugeordnete Kugel 8 abrollbar gelager ist. Optional ist weiterhin eine Düsenfolie 30 vorgesehen, mit Düsenöffnungen für einen lokalen zielgerichteten Medienaustrag.

Der folienartige Aufbau erlaubt eine besonders kostengünstige Herstellung der in Figur 13 illustrierten Magnetventilanordnung, zumal die einzelnen Folien 25, 27, 29 und 30 lediglich entsprechend in Deckung und miteinander verfügt werden müssen. Je nach Wahl der Folienmaterialien sowie deren Foliendicken lassen sich auf diese Weise flächig biegsame Magnetventileinheiten realisieren.

### Bezugszeichenliste

- 1: erste Magneteinheit
- 2: Hohlkanal
- 3: trichterförmige Ausnehmung
- 4: Kontaktfläche
- 5: Strömungsöffnung
- 6: Umfangsrand
- 7: ringförmiger Flächenabschnitt
- 8: zweite Magneteinheit
- 9: Distanzelement
- 10: flexible Hohlleitung
- 11: Dispensernadel
- 11': Dispensereinheit
- 11": Tubenhals
- 12: Flächensubstratplatte
- 13: Durchgangskanäle
- 14: Reservoirvolumen
- 15: Druckversorgung
- 16: Rollkörper
- 17: Stabmagnet
- 18: Reservoirvolumen
- 19: flaschenartiges Behältnis
- 20: Flaschenhals bzw. Flaschenöffnung
- 21: Verschluss
- 22: Flascheneinlass
- 23: Förderdruckleitung
- 24: Sammelleitung
- 25: Reservoirfolie
- 26: Durchgangsöffnungen
- 27: Magnetfolie
- 28: Reservoirvolumen
- 29: Ventilsitzfolie
- 30: Düsenfolie

## Patentansprüche

1. Magnetventileinheit zum Unterbrechen oder Freigeben eines Durchflusses eines Mediums längs eines Hohlkanals (2), das Druckbeaufschlagt längs des Hohlkanals (2) strömt, mit wenigstens einer längs des Hohlkanals (2) fest angeordneten ersten Magneteinheit (1), die hohlzylinderförmig ausgebildet und in einem axialen Abschnitt längs des Hohlkanal (2) derart angeordnet ist, dass die erste Magneteinheit (1) den Hohlkanal (2) radial vollständig umschließt und an ihrem stromabwärtigen Ende eine im Querschnitt kreisförmige Strömungsöffnung (5) aufweist, sowie einer zur ersten Magneteinheit (1) beweglich gelagerten, als Kugel ausgebildeten zweiten Magneteinheit (8), deren Kugeldurchmesser größer ist als der Strömungsöffnungsdurchmesser der ersten Magneteinheit (1) und die aufgrund einer zwischen beiden Magneteinheiten herrschenden anziehenden Magnetkraft in mittel-oder unmittelbaren Kontakt mit der ersten Magneteinheit (1) bringbar ist und dabei den Hohlkanal (2) fluiddicht abdichtet, während das Medium Druckbeaufschlagt entgegen der Wirkrichtung der Magnetkraft auf die zweite Magneteinheit (8) lastet,
**dadurch gekennzeichnet, dass** an der im Querschnitt kreisförmigen Strömungsöffnung (5) mittelbar oder unmittelbar eine gegenüber einer der Strömungsöffnung (5) zuordenbaren Ebene angewinkelte, die Strömungsöffnung (5) umgebende Konturfläche (4) derart anschließt, dass die kugelförmig ausgebildete zweite Magneteinheit (8) axial und radial relativ zur Strömungsöffnung (5) längs der Konturfläche (4) abrollbar gelagert ist, so dass die zweite Magneteinheit (8) in einer geöffneten Stellung unabhängig von der Druckbeaufschlagung des Mediums stets im körperlichen Kontakt mit der Konturfläche (4) bleibt.

2. Magnetventileinheit nach Anspruch 1,
**dadurch gekennzeichnet, dass** die Konturfläche (4) sich in Strömungsrichtung trichterförmig aufweitend die Strömungsöffnung (5) umgibt.

3. Magnetventileinheit nach Anspruch 1 oder 2,
**dadurch gekennzeichnet, dass** unmittelbar an die Strömungsöffnung (5) ein in der Ebene der Strömungsöffnung (5) liegender, ringförmiger Flächenabschnitt (7) radial angrenzt, an dessen radialen Umfangsrand die gegenüber der Ebene der Strömungsöffnung (5) angewinkelte Konturfläche (4) angrenzt.

4. Magnetventileinheit nach einem der Ansprüche 1 bis 3,
**dadurch gekennzeichnet, dass** die Konturfläche (4) Teil der ersten Magneteinheit (1) ist.

5. Magnetventileinheit nach einem der Ansprüche 1 bis 3,
**dadurch gekennzeichnet, dass** die Konturfläche (4) Teil eines axial an die erste Magneteinheit (1) angrenzenden Distanzelementes (9) ist.

6. Magnetventileinheit nach Anspruch 5,
**dadurch gekennzeichnet, dass** das Distanzelement (9) aus einem ferromagnetischen oder aus einem nicht ferromagnetischen Werkstoff besteht.

7. Magnetventileinheit nach einem der Ansprüche 1 bis 6,
**dadurch gekennzeichnet, dass** die erste und zweite Magneteinheit (1, 8) aus einem permanentmagnetischen Material bestehen, oder
dass eine der beiden Magneteinheiten aus einem permanentmagnetischen Material besteht und die andere Magneteinheit aus einem ferromagnetischen Material.

8. Magnetventileinheit nach einem der Ansprüche 1 bis 7,
**dadurch gekennzeichnet, dass** die kreisförmige Strömungsöffnung (5) am stromabwärtigen Ende der ersten Magneteinheit (1) von einer angephasten Kante umgeben ist.

9. Verwendung der Magnetventileinheit nach einem der Ansprüche 1 bis 8 als Verschlussventil innerhalb einer Ausbringeinheit zum dosierten Mengenaustrag eines Mediums aus einem Mediumreservoir.

10. Verwendung nach Anspruch 9,
**dadurch gekennzeichnet, dass** die Ausbringeinheit mit dem Mediumreservoir abnehmbar verbunden ist.

11. Verwendung nach Anspruch 10,
**dadurch gekennzeichnet, dass** die Ausbringeinheit als Deckelement mit Schraub-oder Steckverschluß für eine fluiddichte Verbindung zum Mediumreservoir ausgebildet ist, wobei das Mediumreservoir in Art einer Tube, Dose, Flasche oder Beutel ausgebildet ist.

12. Verwendung der Magnetventileinheit nach einem der Ansprüche 1 bis 8 als Verschlussventil innerhalb einer Befüllungseinheit zum dosierten Befüllen einer Volumeneinheit.

13. Verwendung nach Anspruch 12,
**dadurch gekennzeichnet, dass** die Befüllungseinheit zum dosierten Belüften einer als Mediumreservoir ausgebildeten Volumeneinheit vorgesehen ist.

14. Verwendung nach Anspruch 9,
**dadurch gekennzeichnet, dass** die Ausbringeinheit untrennbar mit dem in Art einer Tube, Dose, Flasche oder Beutel ausgebildeten Mediumreservoir verbunden ist.

15. Verwendung nach einem der Ansprüche 8 bis 14,
**dadurch gekennzeichnet, dass** das Mediumreservoir eine verformbare Reservoirwand vorsieht, die durch äußere Krafteinwirkung zum Zwecke eines dosierten Medienaustrages deformierbar ist.

16. Verwendung der Magnetventileinheit nach einem der Ansprüche 1 bis 8 zum flächigen Ausbringen eines Funktionsstoffes, insbesondere eines Schmierstoffes, **dadurch gekennzeichnet, dass** in einem Trägersubstrat (12) flächig verteilt eine Vielzahl das Trägersubstrat (12) durchragende Durchgangskanäle enthalten sind, in denen jeweils eine Magnetventileinheit untergebracht ist, und
dass das Trägersubstrat einseitig ein Mediumreservoir (18) abdeckt, in dem ein Medium bevorratet ist, das Druck beaufschlagbar ist.

17. Verwendung der Magnetventileinheit nach einem der Ansprüche 1 bis 8 zum flächigen Ausbringen eines Funktionsstoffes, insbesondere eines Schmierstoffes, **dadurch gekennzeichnet, dass** in einem Trägersubstrat (12) flächig verteilt eine Vielzahl das Trägersubstrat (12) durchragende Durchgangskanäle (13) enthalten sind, in denen jeweils eine Magnetventileinheit untergebracht ist,
dass das Trägersubstrat (12)einseitig ein Mediumreservoir (14) abdeckt, in dem ein Medium bevorratet ist, und
dass längs der Oberseite des Trägersubstrates (12), die dem Mediumreservoir (14) abgewandt ist, wenigstens eine Magneteinheit (17) geführt wird, die ein die einzelnen Magnetventile in eine geöffnete Ventilstellung überführendes externes Magnetfeld hervorruft, das die magnetisch bedingte Haltekraft zwischen der erste und zweiten Magneteinheit jedes einzelnen Magnetventils zumindest zeitweise zu reduzieren vermag.

18. Verwendung nach Anspruch 16 oder 17,
**dadurch gekennzeichnet, dass** die Durchgangskanäle (13) arrayförmig längs des Trägersubstrates (12) angeordnet sind.

19. Verwendung nach einem der Ansprüche 16 bis 18,
**dadurch gekennzeichnet, dass** die dem Mediumreservoir (14) abgewandte Trägersubstratoberfläche (12) als Gleit- oder Rollfläche für wenigstens einen Gleit-oder Rollkörper (16) dient.

20. Verwendung nach Anspruch 9 zu Mischung wenigstens zweier unterschiedlicher Medien,
**dadurch gekennzeichnet, dass** wenigstens zwei Ausbringeinheiten vorgesehen sind, von denen jedes einzelne Verschlussventil über eine unterschiedliche Ventilöffnungskraft verfügt,
dass jedes Mediumreservoir mit einer gemeinsamen Förderdruckleitung (23) verbunden ist, über die ein vorgebbarer Förderdruck auf jedes einzelne Mediumreservoir vorgebbar ist, und
dass die Ausbringeinheiten mit einer gemeinsamen Sammelleitung (24) verbunden sind, in die der Medienaustrag jeder einzelnen Ausbringeinheit erfolgt.

## Claims

1. A solenoid valve for interrupting or releasing a through flow of a medium along a hollow channel (2), which flows along the hollow channel (2) under the application of pressure, having at least one first magnet unit (1), which is situated fixedly along the hollow channel (2), and which is implemented in the form of a hollow cylinder and is situated in an axial section along the hollow channel (2) in such a manner that the first magnet unit (1) radially completely encloses the hollow channel (2) and has a flow opening (5), which is circular in cross-section, on its downstream end, and a second magnet unit (8), which is mounted so it is movable to the first magnet unit (1) and is implemented as a sphere, whose sphere diameter is greater than the flow opening diameter of the first magnet unit (1) and can be moved into indirect or direct contact with the first magnet unit (1) because of an attractive magnetic force prevailing between both magnet units, and seals the hollow channel (2) fluid-tight in this case, while the medium loads the second magnet unit (8) under the application of pressure opposite to the action direction of the magnetic force, **characterized in that** the flow opening (5), which is circular in cross-section, indirectly or directly adjoins a contour surface (4), which is angled in relation to a plane assignable to the flow opening (5) and encloses the flow opening (5), in such a manner that the spherical second magnet unit (8) is mounted so it can be rolled along the contour surface (4) axially and radially relative to the flow opening (5), so that the second magnet unit (8) always remains in physical contact with the contour surface (4) in an open position independently of the pressure application to the medium.

2. The solenoid valve unit according to Claim 1, **characterized in that** the contour surface (4) encloses the flow opening (5) while widening in a funnel shape in the flow direction.

3. The solenoid valve unit according to Claim 1 or 2, **characterized in that** a ring-shaped surface section (7), which lies in the plane of the flow opening (5), directly radially adjoins the flow opening (5), the radial peripheral edge of the surface section adjoining the contour surface (4), which is angled in relation to the plane of the flow opening (5).

4. The solenoid valve unit according to one of Claims 1 to 3, **characterized in that** the contour surface (4) is part of the first magnet unit (1).

5. The solenoid valve unit according to one of Claims 1 to 3, **characterized in that** the contour surface (4) is part of an axial spacer element (9) adjoining the first magnet unit (1).

6. The solenoid valve unit according to Claim 5, **characterized in that** the spacer element (9) consists of a ferromagnetic material or a non-ferromagnetic material.

7. The solenoid valve unit according to one of Claims 1 to 6, **characterized in that** the first and second magnet units (1, 8) consist of a permanent magnetic material, or one of the two magnet units consists of a permanent magnetic material and the other magnet unit consists of a ferromagnetic material.

8. The solenoid valve unit according to one of Claims 1 to 7, **characterized in that** the circular flow opening (5) is enclosed by a chamfered edge on the downstream end of the first magnet unit (1).

9. A use of the solenoid valve unit according to one of Claims 1 to 8 as a closure valve inside a delivery unit for the dosed quantity delivery of a medium from a medium reservoir.

10. The use according to Claim 9, **characterized in that** the delivery unit is removably connected to the medium reservoir.

11. The use according to Claim 10, **characterized in that** the delivery unit is designed as a cover element having a screw or plug closure for a fluid-tight connection to the medium reservoir, the medium reservoir being implemented as a tube, can, bottle, or bag.

12. A use of the solenoid valve unit according to one of Claims 1 to 8 as a closure valve inside a filling unit for the dosed filling of a volume unit.

13. The use according to Claim 12, **characterized in that** the filling unit is provided for the dosed ventilation of a volume unit implemented as a medium reservoir.

14. The use according to Claim 9, **characterized in that** the delivery unit is permanently connected to the medium reservoir, which is implemented as a tube, can, bottle, or bag.

15. The use according to one of Claims 8 to 14, **characterized in that** the medium reservoir provides a deformable reservoir wall, which is deformable by external force action for the purpose of a dosed medium delivery.

16. A use of the solenoid valve unit according to one of Claims 1 to 8 for the planar delivery of a functional material, in particular a lubricant,
**characterized in that** a plurality of through channels which protrude through a carrier substrate (12) are contained distributed over the surface in the carrier substrate (12), in each of which a solenoid valve unit is housed, and
the carrier substrate covers a medium reservoir (18) on one side, in which a medium is stored, to which pressure can be applied.

17. A use of the solenoid valve unit according to one of Claims 1 to 8 for the planar delivery of a functional material, in particular a lubricant,
**characterized in that** a plurality of through channels (13) which protrude through a carrier substrate (12) are contained distributed over the surface in the carrier substrate (12), in each of which a solenoid valve unit is housed,
the carrier substrate (12) covers a medium reservoir (14) on one side, in which a medium is stored, and
along the top side of the carrier substrate (12), which faces away from the medium reservoir (14), at least one magnet unit (17) is guided, which induces an external magnetic field, which transfers the individual solenoid valves into an open valve position, and which is capable of at least temporarily reducing the magnetically caused retaining force between the first and second magnet units of each individual solenoid valve.

18. The use according to Claim 16 or 17, **characterized in that** the through channels (13) are situated in the form of an array along the carrier substrate (12).

19. The use according to one of Claims 16 to 18, **characterized in that** the carrier substrate surface (12) facing away from the medium reservoir (14) is used as a sliding or rolling surface for at least one sliding or rolling body (16).

20. The use according to Claim 9 for mixing at least two different media,
**characterized in that** at least two delivery units are provided, of which each individual closure valve has a different valve opening force,
each medium reservoir is connected to a common delivery pressure line (23), via which a pre-definable delivery pressure is pre-definable on each individual medium reservoir, and
the delivery units are connected to a common collection line (24), in which the medium delivery of each individual delivery unit occurs.

## Revendications

1. Unité d'électrovanne pour interrompre ou libérer l'écoulement d'un fluide le long d'un canal creux (2) qui s'écoule alimenté en pression le long du canal creux (2), comprenant au moins une première unité magnétique (1) disposée fixement le long du canal creux (2), qui est en forme de cylindre creux et ainsi placée dans une section axiale le long du canal creux (2) que la première unité magnétique (1) entoure complètement le canal creux (2) radialement et présente sur son extrémité en aval de l'écoulement une ouverture d'écoulement (5) de section circulaire, ainsi qu'une deuxième unité magnétique (8) sphérique positionnée de manière mobile par rapport à la première unité magnétique (1) dont le diamètre de sphère est supérieur au diamètre de l'ouverture d'écoulement de la première unité magnétique (1) et qui, en raison d'une force magnétique d'attraction régnant entre deux unités magnétiques, peut être amenée en contact indirect ou direct avec la première unité magnétique (1) et étanchéifie ainsi le canal creux (2) contre les fluides, tandis que le fluide alimenté en pression pèse sur la deuxième unité magnétique (8) contre le sens d'action de la force magnétique, **caractérisée en ce qu'**une surface de contour (4) entourant l'ouverture d'écoulement (5), en angle par rapport à un plan pouvant être attribué à l'ouverture d'écoulement (5), se raccorde directement ou indirectement sur l'ouverture d'écoulement (5) de section circulaire, de telle manière que la deuxième unité magnétique (8) sphérique peut être positionnée en pouvant rouler, axialement et radialement par rapport à l'ouverture d'écoulement (5) le long de la surface de contour (4), de façon à ce que la deuxième unité magnétique (8) dans une position ouverte, indépendamment de l'alimentation en pression du fluide, reste continuellement en contact physique avec la surface de contour (4).

2. Unité d'électrovanne selon la revendication 1, **caractérisée en ce que** la surface de contour (4) entoure l'ouverture d'écoulement (5) en s'élargissant en forme d'entonnoir dans le sens d'écoulement.

3. Unité d'électrovanne selon la revendication 1 ou 2, **caractérisée en ce que** directement sur l'ouverture d'écoulement (5), une section de surface (7) annulaire reposant dans le plan de l'ouverture d'écoulement (5) est délimitée radialement, sur l'arête périphérique radiale de laquelle est délimitée la surface de contour (4) en angle par rapport au plan de l'ouverture d'écoulement (5).

4. Unité d'électrovanne selon l'une des revendications 1 à 3, **caractérisée en ce que** la surface de contour (4) fait partie de la première unité magnétique (1).

5. Unité d'électrovanne selon l'une des revendications 1 à 3, **caractérisée en ce que** la surface de contour (4) fait partie d'un écarteur (9) se délimitant axialement sur la première unité magnétique (1).

6. Unité d'électrovanne selon la revendication 5, **caractérisée en ce que** l'écarteur (9) est en matériau ferromagnétique ou non ferromagnétique.

7. Unité d'électrovanne selon l'une des revendications 1 à 6, **caractérisée en ce que** les première et deuxième unités magnétiques (1, 8) sont en matériau à magnétisme permanent, ou qu'une des deux unités magnétiques est en matériau à magnétisme permanent et l'autre unité magnétique est en matériau ferromagnétique.

8. Unité d'électrovanne selon l'une des revendications 1 à 7, **caractérisée en ce que** l'ouverture d'écoulement (5) circulaire est entourée sur l'extrémité en aval de l'écoulement de la première unité magnétique (1) par une arête phasée.

9. Utilisation de l'unité d'électrovanne selon l'une des revendications 1 à 8 en tant que vanne d'arrêt à l'intérieur d'une unité de distribution pour l'application de quantité dosée d'un fluide d'un réservoir de fluide.

10. Utilisation selon la revendication 9, **caractérisée en ce que** l'unité de distribution est reliée de manière amovible au réservoir de fluide.

11. Utilisation selon la revendication 10, **caractérisée en ce que** l'unité de distribution est formée en tant qu'élément de couverture avec une fermeture vissée ou enfichée pour une liaison étanche aux fluides vers le réservoir de fluide, sachant que le réservoir de fluide est formé comme un tube, une boite, une bouteille ou un sachet.

12. Utilisation de l'unité d'électrovanne selon l'une des revendications 1 à 8 en tant que vanne d'arrêt à l'intérieur d'une unité de remplissage pour le remplissage dosé d'une unité volumique.

13. Utilisation selon la revendication 12, **caractérisée en ce que** l'unité de remplissage est prévue pour la ventilation dosée d'une unité volumique formée en tant que réservoir de fluide.

14. Utilisation selon la revendication 9, **caractérisée en ce que** l'unité de distribution est reliée de manière non séparable au réservoir de fluide formé comme un tube, une boite, une bouteille ou un sachet.

15. Utilisation de l'unité d'électrovanne selon l'une des revendications 8 à 14, **caractérisée en ce que** le réservoir de fluide prévoit une paroi de réservoir déformable, qui peut être déformée par l'effet d'une force extérieure, à des fins d'application dosée de fluide.

16. Utilisation de l'unité d'électrovanne selon l'une des revendications 1 à 8 pour l'application en surface d'une matière fonctionnelle, en particulier d'une matière lubrifiante, **caractérisée en ce que** dans un substrat porteur (12), une pluralité de canaux traversants traversant le substrat porteur (12) sont contenus, répartis sur la surface, dans lesquels une unité d'électrovanne respective est logée, et que le substrat porteur couvre d'un côté un réservoir de fluide (18), dans lequel un fluide est stocké, lequel peut être alimenté en pression.

17. Utilisation de l'unité d'électrovanne selon l'une des revendications 1 à 8 pour l'application en surface d'une matière, fonctionnelle, en particulier d'une matière lubrifiante, **caractérisée en ce que** dans un substrat porteur (12), une pluralité de canaux traversants (13) traversant le substrat porteur (12) sont contenus, répartis sur la surface, dans lesquels une unité d'électrovanne respective est logée, et que le substrat porteur (12) couvre d'un côté un réservoir de fluide (14), dans lequel un fluide est stocké, qui peut être alimenté en pression, et
que le long de la face supérieure du substrat porteur (12) qui est détournée du réservoir de fluide (14), au moins une unité magnétique (17) est guidée, laquelle déclenche un champ magnétique externe amenant les différentes unités magnétiques à une position de vanne ouverte, lequel est capable de réduire au moins temporairement la force de retenue due à la force magnétique entre les première et deuxième unités magnétiques de chaque électrovanne.

18. Utilisation selon la revendication 16 ou 17, **caractérisée en ce que** les canaux traversants (13) sont disposés en rangées le long du substrat porteur (12) .

19. Utilisation selon l'une des revendications 16 à 18, **caractérisée en ce que** la face supérieure du substrat porteur (12) détournée du réservoir de fluide (14) sert de face de glissement ou de roulement pour au moins un corps de glissement ou de roulement (16).

20. Utilisation selon la revendication 9, pour le mélange d'au moins deux fluides différents, **caractérisée en ce qu'**au moins deux unités de distribution sont prévues, dont chaque vanne d'arrêt respective dispose d'une force d'ouverture de vanne différente,
que chaque réservoir de fluide est relié à une conduite de pression de refoulement (23) commune par laquelle une pression de refoulement pouvant être prédéfinie, peut être prédéfinie sur chaque réservoir de fluide respectif et
que les unités de distribution sont reliées à une conduite collectrice (24) commune dans laquelle a lieu l'application de fluide de chaque unité de distribution respective.
